# EUROPEAN PATENT APPLICATION

(11) **EP 4 354 796 A1**
(43) Date of publication of application: **17.04.2024**
(21) Application number: 22200691.8
(22) Date of filing: 10.10.2022
(51) Int. Cl.: H04L 9/40, G06F 21/62

(54) **A VEHICULAR SYSTEM FOR RESTRICTING ACCESS TO PERSONAL DATA ASSOCIATED WITH A VEHICLE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: SETTERBERG, Johan, 416 79 GÖTEBORG (SE); LINDBERG NILSSON, Erik, 417 47 GÖTEBORG (SE)
(74) Representative: Zacco Sweden AB

(57) **Abstract**

The disclosure relates to a vehicular system (100) for restricting access to personal data associated with a vehicle (1), the system (100) comprises a processing circuitry (102a,102b,102c) configured to store at least a first set of personal data tagged with user identity, store at least a second set of personal data tagged with user identity, send a request message indicative of a request to access the first set of personal data, receive a response message indicative of approval to access the first set of personal data, and determine when to allow access to the first set of personal data while restricting access to at least the second set of personal data. The disclosure further relates to a method for restricting access to personal data associated with a vehicle (1) and a computer program product (500).

## Description

### Technical field

The present disclosure relates to a vehicular system, a method and a computer program product for restricting access to personal data associated with a vehicle.

### Background art

Vehicles today generate large amounts of data that is associated with a person that is using the vehicle. This data, can e.g. tell the geographical location where a person has been, what speed the person has been driving at the certain geographical location, but also tell who else was present together with the person in the vehicle, etc.

Vehicles are often shared with other persons, e.g. with family members, within vehicle sharing communities, in vehicle rental services and similar services.

Vehicles are also from time to time shared with vehicle service personnel and vehicle service providers etc. that is given access to the vehicle during a limited time.

It is desired, both by individuals, but also in order to be compliant with respect to national personal data protection laws and regulations, that some data, that is personal data, is hidden from others to access, e.g. from service personnel.

Today personal data can be accessed when e.g. the vehicle is at service. When the service personnel has the key to the vehicle, a lot of personal data can be accessed that is not needed in order to perform certain service the vehicle.

However, sometimes it may be desired for service personnel to access some personal data in order to perform a certain service.

### Summary

It is an object of the present disclosure to mitigate, alleviate or eliminate one or more of the above-identified deficiencies and disadvantages in the prior art and solve at least the above mentioned problem.

According to a first aspect there is provided a vehicular system for restricting access to personal data associated with a vehicle. The system comprises a processing circuitry configured to store at least a first set of personal data tagged with user identity, store at least a second set of personal data tagged with user identity.

The processing circuitry configured is further configured to send a request message indicative of a request to access the first set of personal data, receive a response message indicative of approval to access the first set of personal data, and determine when to allow access to the first set of personal data while restricting access to at least the second set of personal data.

One advantage with the first aspect is that personal data can be restricted from access by others, but upon request, allowance can be given to access part of the personal data, while restricting access to other part of the personal data, that will remain hidden.

According to some embodiments, the processing circuitry is further configured to detect a request for vehicle service, determine the type of vehicle service that is requested, and identify the first set of personal data that is desired for the determined type of vehicle service.

One advantage with this embodiment is that dependent on the type of vehicle service, certain data that is needed for the service can be identified and, access to the desired data can be requested and approved before the service.

According to some embodiments, the processing circuitry is further configured to determine the first set of personal data that is approved to access and determine at least a second set of personal data that is not approved to access that will be restricted from access.

One advantage with this embodiment is that when it is determined when to allow access to the first set of personal data while restricting access to at least the second set of personal data, the first set of personal data that is approved to access can be determined, and the second set of personal data that is not approved to access can be determined, in order to have the data ready when the first set of personal data is to be accessed.

According to some embodiments, the processing circuitry is further configured to determine the geographical location of the vehicle, determine if the vehicle is at a predetermined location, and allow access to the first set of personal data in a determination that the vehicle is at the predetermined location.

One advantage with this embodiment is that the determination when to allow access to the first set of personal data, is using the geographical location of the vehicle to allow access to the first set of personal data.

According to some embodiments, the first set of personal data tagged with user identity and the second set of personal data tagged with user identity are defined by a source of origin of the data or defined by a sensor associated with the data when obtaining the data.

One advantage with this embodiment is that the source of origin of the data, or the sensor associated with the data when obtaining the data can be used in order to sort the data at an early stage.

According to some embodiments, the processing circuitry is further configured to obtain personal data, obtain user preference settings how to store personal data, and determine, by an Artificial Intelligence model, such as a neural network, if the obtained personal data is to be stored as a first set of personal data tagged with user identity or to be stored as a second set of personal data tagged with user identity.

One advantage with this embodiment is that a user can indicate preferences how to store data and the Artificial Intelligence model supports with the storing of the data accordingly.

According to some embodiments, the personal data tagged with user identity is further tagged as General Data Protection Regulation data, and restriction of access to the personal data tagged as General Data Protection Regulation data is managed by the response message indicative of approval to access the first set of personal data.

One advantage with this embodiment is that a user can approve access to General Data Protection Regulation data by approving access to the first set of personal data while restricting access to at least the second set of personal data. The system can hence be used to support compliance with national regulations such as General Data Protection Regulation.

According to some embodiments, the request message indicative of a request to access the first set of personal data further comprises a request for user identification data, and the response message indicative of approval to access the first set of personal data further comprises user identification data.

One advantage with this embodiment is that with user identification data, it can be verified that it is the correct user that is giving access to the first set of personal data

According to a second aspect there is provided a method for restricting access to personal data associated with a vehicle.

The method comprising the step of storing at least a first set of personal data tagged with user identity, the step of storing at least a second set of personal data tagged with user identity, the step of sending a request message indicative of a request to access the first set of personal data, the step of receiving a response message indicative of approval to access the first set of personal data, and the step of determining when to allow access to the first set of personal data while restricting access to at least the second set of personal data.

One advantage with the first aspect is that personal data can be restricted from access by others, but upon request, allowance can be given to access part of the personal data, while restricting access to other part of the personal data, that will remain hidden.

According to some embodiments, the method further comprises the step of detecting a request for vehicle service, the step of determining the type of vehicle service that is requested, and the step of identifying the first set of personal data that is desired for the determined type of vehicle service.

One advantage with this embodiment is that dependent on the type of vehicle service, certain data that is needed for the service can be identified and, access to the desired data can be requested and approved before the service.

According to some embodiments, the method further comprises the step of determining the first set of personal data that is approved to access and determining at least a second set of personal data that is not approved to access that will be restricted from access.

One advantage with this embodiment is that when it is determined when to allow access to the first set of personal data while restricting access to at least the second set of personal data, the first set of personal data that is approved to access can be determined, and the second set of personal data that is not approved to access can be determined, in order to have the data ready when the first set of personal data is to be accessed.

According to some embodiments, the method further comprises the step of obtaining personal data, the step of obtaining user preference settings how to store personal data, and the step of determining, by an Artificial Intelligence model, such as a the neural network, if the obtained personal data is to be stored as a first set of personal data tagged with user identity or to be stored as a second set of personal data tagged with user identity.

One advantage with this embodiment is that a user can indicate preferences how to store data and the Artificial Intelligence model supports with the storing of the data accordingly.

According to some embodiments, the first set of personal data tagged with user identity and the second set of personal data tagged with user identity are defined by a source of origin of the data or defined by a sensor associated with the data when obtaining the data.

One advantage with this embodiment is that the source of origin of the data, or the sensor associated with the data when obtaining the data can be used in order to sort the data at an early stage.

According to some embodiments, the method further comprises the step of determining the geographical location of the vehicle, the step of determining if the vehicle is at a predetermined location, and the step of allowing access to the first set of personal data in a determination that the vehicle is at the predetermined location.

One advantage with this embodiment is that the determination when to allow access to the first set of personal data, is using the geographical location of the vehicle to allow access to the first set of personal data.

According to a third aspect there is provided a computer program product comprising a non-transitory computer readable medium, having thereon a computer program comprising program instructions, the computer program being loadable into a processing circuitry and configured to cause execution of the method when the computer program is run by the processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates an example vehicular system for restricting access to personal data associated with a vehicle according to an embodiment of the present disclosure.
Figure 2 illustrates a flow chart of the method steps according to the second aspect of the disclosure.
Figure 3 illustrates a computer program product according to the third aspect of the disclosure.
Figure 4a illustrates obtaining and storing different sets of data associated with the vehicle.
Figure 4b illustrates approval to access the first set of personal data while restricting access to at least the second set of personal data.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

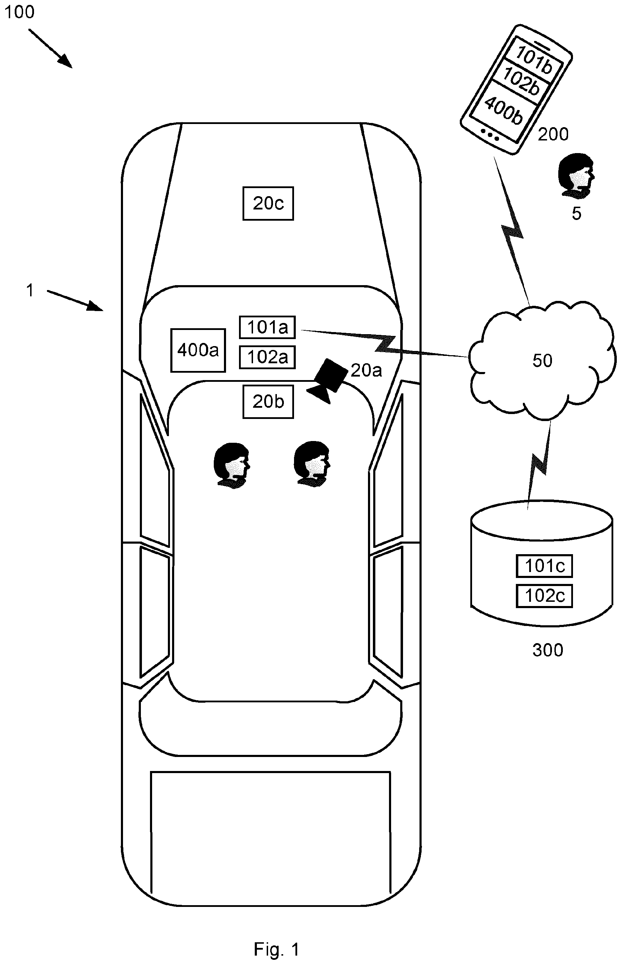

Figure 1 illustrates an example vehicular system for restricting access to personal data associated with a vehicle according to an embodiment of the present disclosure.

The first aspect of this disclosure shows a vehicular system 100 for restricting access to personal data associated with a vehicle 1. The system 100 comprises a processing circuitry 102a,102b,102c.

According to some embodiments the processing circuitry 102a is the processing circuitry of an on-board vehicle computer, as illustrated in Figure 1.

According to some embodiments the processing circuitry 102b, 102c is comprised in an electronic device 200, 300 connectable to the vehicular system 100 via a wireless communication network 50, as illustrated in Figure 1.

According to some embodiments the vehicular system 100 further comprises a memory 101a,101b,101c configured to store data.

According to some embodiments the memory 101a is the memory of an on-board vehicle computer, as illustrated in Figure 1.

According to some embodiments the memory 101b, 101c is comprised in an electronic device 200, 300 connectable to the vehicular system 100 via the wireless communication network 50, as illustrated in Figure 1.

According to some embodiments the wireless communication network 50, as illustrated in Figure 1, is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network.

According to some embodiments the wireless communication network 50 is a standardized wireless local area network such as a Wireless Local Area Network, WLAN, Bluetooth^{™}, ZigBee, Ultra-Wideband, Radio Frequency Identification, RFID, or similar network.

According to some embodiments wireless communication network 50 can also be a combination of both a local area network and a wide area network. According to some embodiments the wireless communication network 50 is defined by common Internet Protocols.

According to some embodiments the processing circuitry 102a,102b,102c is configured to obtain data. According to some embodiments the data is obtained by a sensor of the vehicle 1. In an example, a sensor is configured to obtain speed data of the vehicle.

According to some embodiments the obtained data is personal data. According to some embodiments personal data is data that is associated with a person. In an example, speed data of the vehicle is associated with that a person is driving the vehicle. This person may by any person. In an example, video data of a camera in a vehicle compartment is associated with persons in the video. The persons may by any persons.

According to some embodiments personal data is associated with a user identity. In an example, speed data of the vehicle is associated with that a person is driving the vehicle, and the identity of the person can be determined.

According to some embodiments personal data is tagged with a user identity.

According to some embodiments the personal data is tagged with user identity wherein the tagging is utilizing information indicative of an association with a specific user.

According to some embodiments the tagging is utilizing vehicle key identification information as information associated with a specific user. In an example the user have a private vehicle key, that is used to access the vehicle 1, that is associated with the user.

According to some embodiments the tagging is utilizing user account data information as information associated with a specific user. In an example the user have a user account that is used to access the vehicle 1.

According to some embodiments the tagging is utilizing biometric data as information associated with a specific user. According to some embodiments biometric data or combination of different biometric data can be used to identify the user.

According to some embodiments the tagging is utilizing face recognition data as information associated with a specific user.

According to some embodiments the tagging is utilizing fingerprint data as information associated with a specific user.

According to some embodiments the tagging is utilizing voice recognition data as information associated with a specific user.

According to some embodiments the tagging is utilizing personal identification number code data as information associated with a specific user.

According to some embodiments the tagging is utilizing vehicle booking information data as information associated with a specific user.

According to some embodiments the tagging is utilizing vehicle rental information data as information associated with a specific user.

According to some embodiments the tagging is utilizing video data as information associated with a specific user.

According to some embodiments the processing circuitry 102a,102b,102c is configured to obtain at least a first set of personal data tagged with user identity. In an example the first set of personal data tagged with user identity is speed data of the vehicle that is associated with the identity of the person that is driving the vehicle.

According to some embodiments the processing circuitry 102a,102b,102c is configured to obtain at least a second set of personal data tagged with user identity. In an example the second set of personal data tagged with user identity is video data of a camera in a vehicle compartment that is associated with the identity of the person that is driving the vehicle.

The processing circuitry 102a,102b,102c is configured to store at least a first set of personal data tagged with user identity, store at least a second set of personal data tagged with user identity, send a request message indicative of a request to access the first set of personal data, receive a response message indicative of approval to access the first set of personal data, and determine when to allow access to the first set of personal data while restricting access to at least the second set of personal data.

According to some embodiments the first and second set of personal data tagged with user identity is generated by tagging the obtained data with user identity when the data is obtained.

According to some embodiments all obtained data is tagged with user identity and stored as personal data tagged with user identity.

According to some embodiments all obtained data is tagged with user identity and stored in the memory 101a, 101b, 101c as personal data tagged with user identity.

According to some embodiments personal data tagged with user identity is stored in any of the memory of the on-board vehicle computer 101a or the memory 101b, 101c comprised in an electronic device 200, 300 connectable to the vehicular system 100 via the wireless communication network 50as illustrated in Figure 1.

According to some embodiments personal data tagged with user identity that is only stored in the on-board vehicle computer 101a. In an example, the data is limited to be stored in the on-board vehicle computer 101a so that the data remains the property of the owner of the vehicle 1.

According to some embodiments personal data tagged with user identity that is stored in the on-board vehicle computer 101a and backed up in the memory 101b, 101c comprised in an electronic device 200, 300 connectable to the vehicular system 100 via the wireless communication network 50.

According to some embodiments personal data tagged with user identity that is not stored in the on-board vehicle computer 101a but in the memory 101b, 101c comprised in an electronic device 200, 300 connectable to the vehicular system 100 via the wireless communication network 50. In an example, for integrity and security, the data is stored in an electronic device 200, 300 at a remote location so that it is not possible to hack into the memory of the on-board vehicle computer 101a.

One advantage with the first aspect is that personal data can be restricted from access by others, but upon request, allowance can be given to access part of the personal data, while restricting access to other part of the personal data, that will remain hidden.

In an example, the first set of personal data is data related to identifying the geographical position of the vehicle during a certain time period that is tagged with user identity of the vehicle occupant driving the vehicle at the time, and the second set of personal data is related to video data obtained in the vehicle compartment during the same time period tagged with user identity of the vehicle occupant driving the vehicle at the time.

In the example allowance can be given to access the first set of personal data that is data related to identifying the geographical position of the vehicle during a certain time period, while restricting access to the second set of personal data that is related to the video data obtained in the vehicle compartment during the same time period.

According to some embodiments, the request message indicative of a request to access the first set of personal data is configured to be received at a user terminal 200 and the response message indicative of approval to access the first set of personal data is generated at the user terminal 200.

In an example, with reference to Figure 1, a user 5 of the system 100 can receive the request message at a smartphone 200 of the user 5, and respond to the request message via the user interface 400b of the smartphone.

In an example the first set of personal data is video data obtained of the surroundings of the vehicle 1 and the second set of personal data is video data obtained in the vehicle compartment of the vehicle 1, and access is given to the video data obtained of the surroundings of the vehicle 1 while the video data obtained in the vehicle compartment remains restricted to access.

According to some embodiments, the request message indicative of a request to access the first set of personal data is configured to be processed at the system 100 and the response message indicative of approval to access the first set of personal data is generated by the system 100.

According to some embodiments, the processing circuitry 102a, 102b, 102c is further configured to process the request message indicative of a request to access the first set of personal data based on preconfigured access control settings. In an example a user of the system 100 can input preferred access control settings via a user interface 400a, 400b of the system 100. In an example a user may preconfigure the system 100 to never give access to video data obtained in the vehicle compartment while always give access to the geographical position data.

According to some embodiments, the processing circuitry 102a, 102b, 102c is configured initiate the sending of the request message based on preconfigured vehicle service types. In an example, in a determination that a firmware update over the air, FOTA, is to be performed a request message is sent.

According to some embodiments, the processing circuitry 102a, 102b, 102c is configured initiate the sending of the request message based on sensor data. In an example, in a determination that the vehicle is tilted, as when towing the vehicle 1, a request message is sent.

According to some embodiments the determination when to allow access to the first set of personal data while restricting access to at least the second set of personal data is based on information comprised in the request message.

According to some embodiments the request message is indicative of immediate access to the first set of personal data. In an example the vehicle is at the vehicle service center, and in order to perform certain service, immediate access to the first set of personal data is desired.

According to some embodiments the request message is indicative of access to the first set of personal data at a later point in time. In an example the vehicle planned to be at the vehicle service center at a certain point in time in the future, and in order to perform the service at that time, access to the first set of personal data is desired at the certain point in time in the future.

According to some embodiments the determination when to allow access to the first set of personal data while restricting access to at least the second set of personal data is based on information comprised in the response message.

According to some embodiments the response message is indicative of immediate access to the first set of personal data. In an example the vehicle is at the vehicle service center, and in order to perform certain service, immediate access to the first set of personal data is given.

According to some embodiments the response message is indicative of access to the first set of personal data at a later point in time. In an example the vehicle planned to be at the vehicle service center at a certain point in time in the future, and in order to perform the service at that time, access to the first set of personal data is given at the certain point in time in the future.

In an example, with reference to Figure 1, a user 5 of the system 100 may receive a request message is indicative of immediate access to the first set of personal data, but the user 5 responds with a response message indicative of access to the first set of personal data at a later point in time.

According to some embodiments the request message indicative of a request to access the first set of personal data is sent to a user that was using the vehicle 1 at a certain time when the requested first set of personal data was generated. In an example, the vehicle 1 was involved in a crash at a certain point in time, and further data is needed to investigate the crash.

According to some embodiments the processing circuitry 102a,102b,102c is further configured to receive a response message indicative of disapproval to access at least any of the first set of personal data and the second set of personal data.

According to some embodiments the processing circuitry 102a,102b,102c is further configured to receive a response message indicative of instructions to delete at least any of the first set of personal data and the second set of personal data.

According to some embodiments the processing circuitry 102a,102b,102c is further configured to delete at least any of the first set of personal data and the second set of personal data.

According to some embodiments restricting access to at least the second set of personal data comprises deletion of the at least the second set of personal data.

According to some embodiments the determination when to allow access to the first set of personal data while restricting access to at least the second set of personal data further comprising determining when at least any of the first set of personal data and the second set of personal data can be deleted, and deleting at least any of the first set of personal data and the second set of personal data accordingly.

According to some embodiments the processing circuitry 102a,102b,102c is further configured to determine when the first set of personal data has been accessed.

According to some embodiments the at least any of the first set of personal data and the second set of personal data is deleted after the first set of personal data has been accessed.

According to some embodiments the processing circuitry 102a,102b,102c is further configured to detect a request for vehicle service, determine the type of vehicle service that is requested, and identify the first set of personal data that is desired for the determined type of vehicle service.

One advantage with this embodiment is that dependent on the type of vehicle service, certain data that is needed for the service can be identified and, access to the desired data can be requested and approved before the service.

In an example, the service is related to a battery, and historic power consumption data that comprises speed at a certain point in time is desired. A user may then allow access to the historic power consumption data that comprises speed at a certain point in time, while data related to the geographical position at the certain point in time remains hidden.

According to some embodiments the processing circuitry 102a,102b,102c is further configured to determine the first set of personal data that is approved to access and determine at least a second set of personal data that is not approved to access that will be restricted from access.

One advantage with this embodiment is that when it is determined when to allow access to the first set of personal data while restricting access to at least the second set of personal data, the first set of personal data that is approved to access can be determined, and the second set of personal data that is not approved to access can be determined, in order to have the data ready when the first set of personal data is to be accessed.

In an example, the data files of the first set of personal data is managed and sorted out to be separated from the data files of the second set of personal data.

According to some embodiments the processing circuitry 102a,102b,102c is further configured to determine the geographical location of the vehicle 1, determine if the vehicle 1 is at a predetermined location, and allow access to the first set of personal data in a determination that the vehicle 1 is at the predetermined location.

One advantage with this embodiment is that the determination when to allow access to the first set of personal data, is using the geographical location of the vehicle to allow access to the first set of personal data.

In an example access to the first set of personal data is only allowed when the vehicle is at the geographical location of the vehicle service center and not then the vehicle is not at the geographical location of the vehicle service center. This ensures that it is most likely an employee of the vehicle service center that is given access to the first set of personal data, and not a person outside of the vehicle service center.

According to some embodiments the first set of personal data tagged with user identity and the second set of personal data tagged with user identity are defined by a source of origin of the data or defined by a sensor associated with the data when obtaining the data.

One advantage with this embodiment is that the source of origin of the data, or the sensor associated with the data when obtaining the data can be used in order to sort the data at an early stage.

In an example the source of origin is vehicle engine data such as power consumption, revolutions per minute, engine temperature, etc. and defined as the first set of personal data tagged with user identity, while data from a camera sensor in the vehicle compartment is defined as the second set of personal data tagged with user identity.

According to some embodiments the sensor associated with the data when obtaining the data is a camera sensor 20a.

According to some embodiments the sensor associated with the data when obtaining the data is a microphone 20b.

According to some embodiments the sensor associated with the data when obtaining the data is a vehicle engine data sensor 20c.

According to some embodiments the processing circuitry 102a,102b,102c is further configured to obtain personal data, obtain user preference settings how to store personal data, and determine, by an Artificial Intelligence model, such as a neural network, if the obtained personal data is to be stored as a first set of personal data tagged with user identity or to be stored as a second set of personal data tagged with user identity.

One advantage with this embodiment is that a user can indicate preferences how to store data and the Artificial Intelligence model supports with the storing of the data accordingly.

In an example, a user can indicate that any vehicle engine data such as power consumption, revolutions per minute, engine temperature, e.g. obtained by the vehicle engine data sensor 20c, is to be stored as first set of personal data tagged with user identity while any image data obtained by a camera sensor 20a or voice data obtained by a microphone 20b is to be stored as second set of personal data tagged with user identity.

According to some embodiments the personal data tagged with user identity is further tagged as General Data Protection Regulation data, and restriction of access to the personal data tagged as General Data Protection Regulation data is managed by the response message indicative of approval to access the first set of personal data.

One advantage with this embodiment is that a user can approve access to General Data Protection Regulation data by approving access to the first set of personal data while restricting access to at least the second set of personal data. The system can hence be used to support compliance with national regulations such as General Data Protection Regulation.

In an example the response message is indicative of allowance to access the first set of personal data, and the response message is stored to support compliance with national regulations.

According to some embodiments the request message indicative of a request to access the first set of personal data 1 further comprises a request for user identification data, and the response message indicative of approval to access the first set of personal data further comprises user identification data.

One advantage with this embodiment is that with user identification data, it can be verified that it is the correct user that is giving access to the first set of personal data

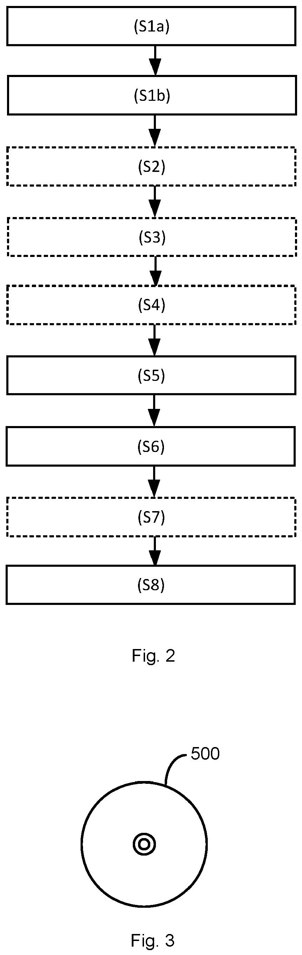

The second aspect of this disclosure shows a method for restricting access to personal data associated with a vehicle 1. Figure 2 illustrates a flow chart of the method steps according to the second aspect of the disclosure.

The method comprising the step of Sla storing at least a first set of personal data tagged with user identity, the step of S1b storing at least a second set of personal data tagged with user identity, the step of S5 sending a request message indicative of a request to access the first set of personal data, the step of S6 receiving a response message indicative of approval to access the first set of personal data, and the step of S8 determining when to allow access to the first set of personal data while restricting access to at least the second set of personal data.

One advantage with the first aspect is that personal data can be restricted from access by others, but upon request, allowance can be given to access part of the personal data, while restricting access to other part of the personal data, that will remain hidden.

According to some embodiments the method further comprises the step of S2 detecting a request for vehicle service, the step of S3 determining the type of vehicle service that is requested, and the step of S4 identifying the first set of personal data that is desired for the determined type of vehicle service.

One advantage with this embodiment is that dependent on the type of vehicle service, certain data that is needed for the service can be identified and, access to the desired data can be requested and approved before the service.

According to some embodiments the method further comprises the step of S7 determining the first set of personal data that is approved to access and determining at least a second set of personal data that is not approved to access that will be restricted from access.

One advantage with this embodiment is that when it is determined when to allow access to the first set of personal data, while restricting access to at least the second set of personal data, the first set of personal data that is approved to access can be determined, and the second set of personal data that is not approved to access can be determined, in order to have the data ready when the first set of personal data is to be accessed.

According to some embodiments the method further comprises the step of obtaining personal data, the step of obtaining user preference settings how to store personal data and the step of determining, by an Artificial Intelligence model, such as a the neural network, if the obtained personal data is to be stored as a first set of personal data tagged with user identity or to be stored as a second set of personal data tagged with user identity.

One advantage with this embodiment is that a user can indicate preferences how to store data and the Artificial Intelligence model supports with the storing of the data accordingly.

According to some embodiments the first set of personal data tagged with user identity and the second set of personal data tagged with user identity are defined by a source of origin of the data or defined by a sensor associated with the data when obtaining the data.

One advantage with this embodiment is that the source of origin of the data, or the sensor associated with the data when obtaining the data can be used in order to sort the data at an early stage.

According to some embodiments the method further comprises the step of determining the geographical location of the vehicle 1, the step of determining if the vehicle 1 is at a predetermined location, and the step of allowing access to the first set of personal data in a determination that the vehicle 1 is at the predetermined location.

One advantage with this embodiment is that the determination when to allow access to the first set of personal data, is using the geographical location of the vehicle to allow access to the first set of personal data.

Figure 3 illustrates a computer program product 500 according to the third aspect of the disclosure. According to the third aspect there is provided a computer program product 500 comprising a non-transitory computer readable medium, having thereon a computer program comprising program instructions, the computer program being loadable into the processing circuitry 102a,102b,102c and configured to cause execution of the method when the computer program is run by the processing circuitry 102a,102b,102c.

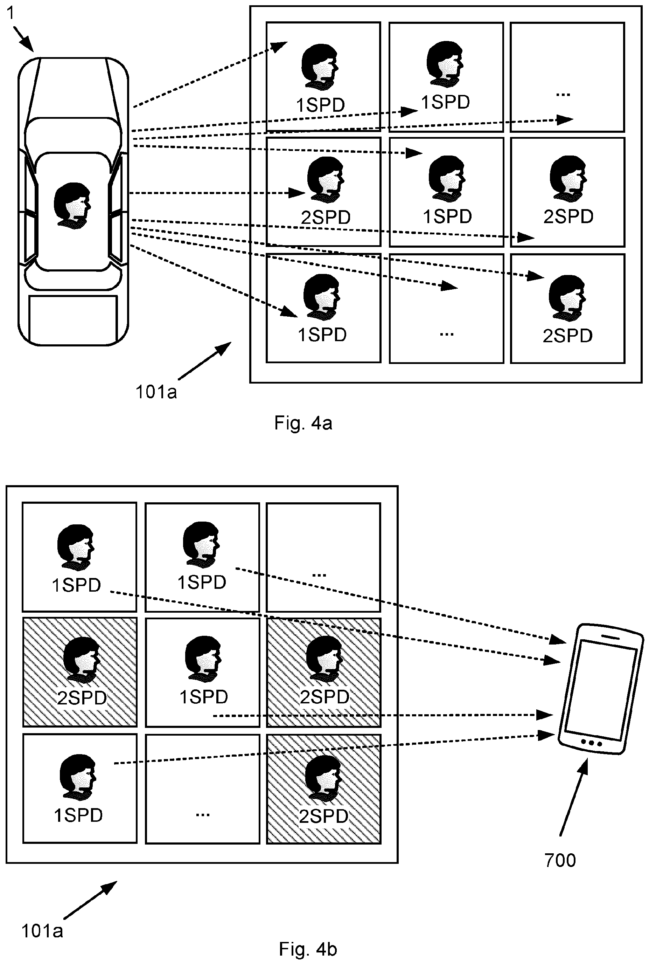

For illustrative purpose, Figure 4a illustrates obtaining and storing different sets of data associated with the vehicle 1 and Figure 4b illustrates approval to access the first set of personal data while restricting access to at least the second set of personal data.

In the example illustration in Figure 4a a memory 101a is visualised as a frame that frames data sets that are stored in the memory 101a. In the example illustration, obtaining data associated with the vehicle 1 is illustrated by arrows and different obtained data is stored in the memory 101a dependent on what type of data it is. Figure 4a illustrates storing of at least a first set of personal data tagged with user identity 1SPD and storing of at least a second set of personal data tagged with user identity 2SPD.

In the example illustration in Figure 4b a request message indicative of a request to access the first set of personal data has been sent and a response message indicative of approval to access the first set of personal data has been received. In the Figure 4b access to the first set of personal data 1SPD has been allowed, and the arrows in Figure 4b illustrates how the first set of personal data is allowed be accessed by an electronic device 700, e.g. a computer at a service centre, while restricting access to at least the second set of personal data that remains in the memory 101a.

The person skilled in the art realizes that the present disclosure is not limited to the preferred embodiments described above. The person skilled in the art further realizes that modifications and variations are possible within the scope of the appended claims.

Additionally, variations to the disclosed embodiments can be understood and effected by the skilled person in practicing the claimed disclosure, from a study of the drawings, the disclosure, and the appended claims.

## Claims

1. A vehicular system (100) for restricting access to personal data associated with a vehicle (1), the system (100) comprises:
a processing circuitry (102a,102b,102c) configured to:
- store at least a first set of personal data tagged with user identity;
- store at least a second set of personal data tagged with user identity;
- send a request message indicative of a request to access the first set of personal data;
- receive a response message indicative of approval to access the first set of personal data; and
- determine when to allow access to the first set of personal data while restricting access to at least the second set of personal data.

2. The system (100) according to claim 1, wherein the processing circuitry (102a,102b,102c) is further configured to:
- detect a request for vehicle service;
- determine the type of vehicle service that is requested; and
- identify the first set of personal data that is desired for the determined type of vehicle service.

3. The system (100) according to any preceding claims, wherein the processing circuitry (102a,102b,102c) is further configured to:
- determine the first set of personal data that is approved to access and determine at least a second set of personal data that is not approved to access that will be restricted from access.

4. The system (100) according to any preceding claims, wherein the processing circuitry (102a,102b,102c) is further configured to:
- determine the geographical location of the vehicle (1);
- determine if the vehicle (1) is at a predetermined location; and
- allow access to the first set of personal data in a determination that the vehicle (1) is at the predetermined location.

5. The system (100) according to any preceding claims, wherein the first set of personal data tagged with user identity and the second set of personal data tagged with user identity are defined by a source of origin of the data or defined by a sensor associated with the data when obtaining the data.

6. The system (100) according to any preceding claims, wherein the processing circuitry (102a,102b,102c) is further configured to:
- obtain personal data;
- obtain user preference settings how to store personal data; and
- determine, by an Artificial Intelligence model, such as a neural network, if the obtained personal data is to be stored as a first set of personal data tagged with user identity or to be stored as a second set of personal data tagged with user identity.

7. The system (100) according to any preceding claims, wherein the personal data tagged with user identity is further tagged as General Data Protection Regulation data, and restriction of access to the personal data tagged as General Data Protection Regulation data is managed by the response message indicative of approval to access the first set of personal data.

8. The system (100) according to any preceding claims, wherein the request message indicative of a request to access the first set of personal data further comprises a request for user identification data; and the response message indicative of approval to access the first set of personal data further comprises user identification data.

9. A method for restricting access to personal data associated with a vehicle (1), the method comprising:
- (Sla) storing at least a first set of personal data tagged with user identity;
- (Sib) storing at least a second set of personal data tagged with user identity;
- (S5) sending a request message indicative of a request to access the first set of personal data;
- (S6) receiving a response message indicative of approval to access the first set of personal data; and
- (S8) determining when to allow access to the first set of personal data while restricting access to at least the second set of personal data.

10. The method according to claim 9 further comprising:
- (S2) detecting a request for vehicle service;
- (S3) determining the type of vehicle service that is requested; and
- (S4) identifying the first set of personal data that is desired for the determined type of vehicle service.

11. The method according to any of the claims 9-10 further comprising:
- (S7) determining the first set of personal data that is approved to access and determining at least a second set of personal data that is not approved to access that will be restricted from access.

12. The method according to any of the claims 9-11 further comprising:
- obtaining personal data;
- obtaining user preference settings how to store personal data; and
- determining, by an Artificial Intelligence model, such as a the neural network, if the obtained personal data is to be stored as a first set of personal data tagged with user identity or to be stored as a second set of personal data tagged with user identity.

13. The method according to any of the claims 9-11 wherein the first set of personal data tagged with user identity and the second set of personal data tagged with user identity are defined by a source of origin of the data or defined by a sensor associated with the data when obtaining the data.

14. The method according to any of the claims 9-13 further comprising:
- determining the geographical location of the vehicle (1);
- determining if the vehicle (1) is at a predetermined location; and
- allowing access to the first set of personal data in a determination that the vehicle (1) is at the predetermined location.

15. A computer program product (500) comprising a non-transitory computer readable medium, having thereon a computer program comprising program instructions, the computer program being loadable into a processing circuitry (102a,102b,102c) and configured to cause execution of the method according to any of claims 9 through 14 when the computer program is run by the processing circuitry (102a,102b,102c).
